# EUROPEAN PATENT SPECIFICATION

(11) **EP 3 509 256 B1**
(45) Date of publication and mention of the grant of the patent: **02.06.2021**
(21) Application number: 18213537.6
(22) Date of filing: 18.12.2018
(51) Int. Cl.: H04L 12/715, H04L 12/751

(54) **DETERMINING ROUTING DECISIONS IN A SOFTWARE-DEFINED WIDE AREA NETWORK**
BESTIMMUNG VON ROUTING-ENTSCHEIDUNGEN IN EINEM SOFTWAREDEFINIERTEN WEITBEREICHSNETZWERK
DÉTERMINATION DES DÉCISIONS DE ROUTAGE DANS UN RÉSEAU ÉTENDU DÉFINI PAR LOGICIEL

(30) Priority: 03.01.2018 US 201815860739
(43) Date of publication of application: 10.07.2019
(73) Proprietor: Hewlett Packard Enterprise Development LP, Houston, TX 77070 (US)
(72) Inventor: Kodavanty, Vamsi, SANTA CLARA, CA 95054 (US); Sen, Subhadeep, SANTA CLARA, CA 95054 (US); Kamsetty, Sridhar, SANTA CLARA, CA 95054 (US); Arumugam, Ponnu Velu, SANTA CLARA, CA 95054 (US); Gopalasetty, Bhanu, SANTA CLARA, CA 95054 (US)
(74) Representative: Haseltine Lake Kempner LLP

(56) References cited:
- EP-A1- 3 131 239
- US-A1- 2017 063 783
- US-B1- 9 467 478
- LI YUNCHUN ET AL: "SDN-based access authentication and automatic configuration for IPSec", 2015 4TH INTERNATIONAL CONFERENCE ON COMPUTER SCIENCE AND NETWORK TECHNOLOGY (ICCSNT), IEEE, vol. 1, 19 December 2015 (2015-12-19), pages 996-999, XP032912038, DOI: 10.1109/ICCSNT.2015.7490904 [retrieved on 2016-06-13]

## Description

### Background

A wide area network (WAN) may connect individual machines or local area networks (LANs) over a long distance. WANs are typically used to connect multiple business locations. WANs may allow companies to centralize or outsource IT infrastructure rather than host servers at each business location. The software-defined wide area network (SD-WAN) may refer to a specific application of software-defined networking (SDN) technology applied to WAN connections, which are used to connect enterprise networks - including branch offices and data centers - over large geographic distances.

US2017/06783 discloses a first network element (NE) implemented as a network virtualization edge (NVE) that includes a receiver configured to receive a packet comprising a destination address, a processor coupled to the receiver and configured to obtain a tunnel identifier of an overlay tunnel that communicatively couples a second NE to a third NE on an overlay path toward the destination address, add the tunnel identifier to an encapsulation header of the packet, and add an address of the second NE to an outer header of the packet, and a transmitter coupled to the processor and configured to transmit the packet to the second NE, wherein the packet is forwarded from the second NE to the third NE via the overlay tunnel identified by the tunnel identifier.

EP3131239A1 discloses a trail establishment method and apparatus. The method includes: sending, by a controller, a trail inquiry message to a dual stack node in a first network, where the trail inquiry message carries identification information of a sink end node of a trail; receiving, by the controller, a trail feedback message sent by the dual stack node, and forming a virtual topology by using a network topology of the first network and a route, which is carried in the trail feedback message, from the dual stack node to the sink end node corresponding to the identification information of the sink end node; and acquiring, by the controller, a route, from the source end node to the sink end node, of the trail according to the virtual topology, and establishing a trail from the source end node to the sink end node. By using the technical solutions of the present invention, a virtual topology is constructed according to a topology of an SDN network and a route, which is fed back by the dual stack node, from a dual stack node to a sink end node, thereby implementing establishment of a trail between a source end node and the sink end node, and further implementing establishment of a trail between nodes in different networks

US9467478B1 discloses a method for creating a secure network. The method comprises establishing an overlay domain to control routing between overlay edge routers based on an underlying transport network, wherein said establishing comprises running an overlay management protocol to exchange information within the overlay domain; in accordance with the overlay management protocol, defining service routes that exist exclusively within the overlay domain, wherein each overlay route includes information on at least service availability within the overlay domain; and selectively using the service routes to control routing between the overlay edge routers; wherein the said routing is through the underlying transport network in a manner in which said overlay routes are shared with the overlay edge routers but not with the underlying transport network via the overlay management protocol.

### Brief Description of the Drawings

For a better understanding of the solution, examples will now be described, with reference to the accompanying drawings, in which:
FIG. 1 is a block diagram of an example computing environment for determining routing decisions in a Software-Defined Wide Area Network (SD-WAN);
FIG. 2 is a block diagram of an example system for determining routing decisions in a SD-WAN;
FIG. 3 is a block diagram of an example method of determining routing decisions on a controller in a SD-WAN; and
FIG. 4 is a block diagram of an example system including instructions in a machine-readable storage medium for determining routing decisions on a controller in a SD-WAN.

### Detailed Description

WANs may allow organizations to extend their computer networks over large distances, for example, to connect remote branch offices to data centers and each other. However, extending networks over large distances and sometimes across multiple carriers' networks may face operational such as network congestion, jitter, packet loss, etc. Software-defined networking in a wide area network (SD-WAN) may be used to address these challenges.

SD-WAN may simplify the management and operation of a WAN by decoupling (separating) the networking hardware from its control mechanism. SD-WAN solutions may employ centrally managed WAN edge devices placed in branch offices to establish logical connections with other branch edge devices across a physical WAN. SD-WAN may be used to automatically balance workloads across multiple connections, maximize cost-efficiencies while optimizing applications and traffic across multiple uplinks.

In an example, SD-WAN branch deployment, route exchange may be carried out by statically configuring routes, exchanging routes through Internet Key Exchange (IKE) protocol extensions or running a dynamic routing protocol such as Open Shortest Path First (OSPF) protocol. There are many scaling challenges with a routing protocol such as OSPF which is a kind of a chatty protocol. Apart from those, there may be overheads in creating Generic Routing Encapsulation (GRE) tunnels on top of an IPsec tunnel to run OSPF since OSPF does not run on IPsec tunnels. All of these may involve a large number of configurations on each node that complicates the deployment. Needless to say, it's not a desirable scenario from an enterprise's perspective.

The present disclosure describes various examples for determining routing decisions on a network device in a Software-Defined Wide Area Network (SD-WAN). According to the invention, a network device in a SD-WAN comprising a plurality of network nodes receives respective routing information from respective routing agents present on each node of the plurality of network nodes. The network device determines an overlay network topology among the plurality of network nodes. Based on the overlay network topology and the respective routing information received from the respective routing agents, the network device determines respective routing decisions for each node. The network device distributes the respective routing decisions to corresponding network nodes in the SD-WAN.

The invention is defined by the independent claims. Further examples are provided in the dependent claims.

The examples described herein may eliminate running of a chatty dynamic routing protocol (for example, OSPF) between the headend and branch controllers. The examples described herein may setup relevant forwarding paths in the headend and branch controllers without elaborate configuration.

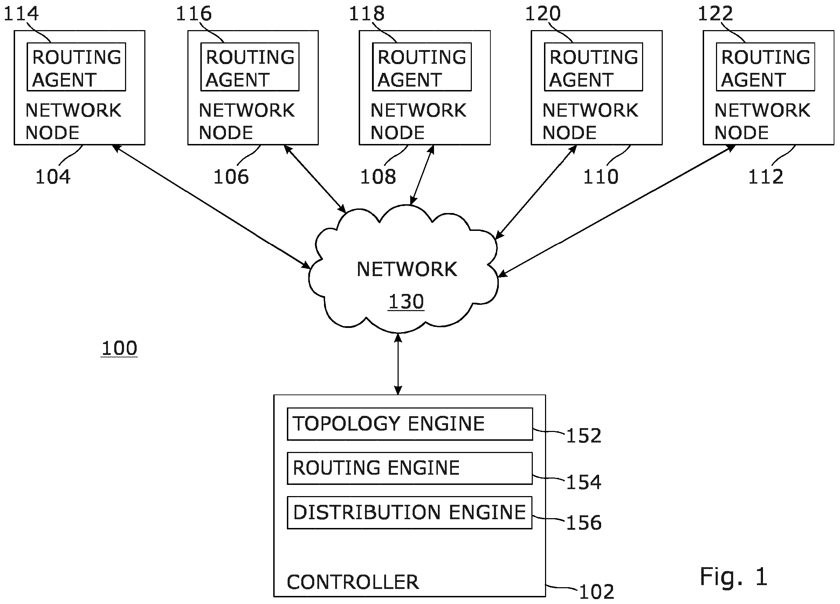

FIG. 1 is a block diagram of an example computing environment 100 for determining routing decisions in a Software-Defined Wide Area Network (SD-WAN).

To provide some context, Software defined networking (SDN) is an approach to networking in which control is decoupled from networking equipment and given to a device called SDN controller. The SDN controller is aware of all the devices and their points of interconnection in a SDN network and may perform various functions such as routing, policy implementation, receiving unknown flow packets, path resolution, flow programming, etc. Each new or missed flow through the network is routed via the controller that decides the network path for a flow and adds an entry for that flow in a flow table, in each of the network devices along the path. A SDN enabled device consults a flow table(s) for forwarding packets in the data plane. Each forwarding rule (flow entry) includes an action that dictates how traffic that matches the rule is to be handled.

OpenFlow is a standard protocol for implementing SDN architecture. An OpenFlow enabled network device (for example, a network switch) may include a flow table(s), which may perform packet lookups and forwarding. The switch may be managed by an external controller (for example, an SDN controller) via the OpenFlow protocol.

In an example, computing environment 100 may include a controller 102 and a plurality of network nodes 104, 106, 108, 110, and 112. Although five network nodes 104, 106, 108, 110, and 112 are shown in FIG. 1, other examples of this disclosure may include more or less than five network nodes.

Controller 102 may be any server, computing device, or the like. In an example, controller 102 may store and execute a computer application (machine-executable instructions). In an example, controller may include a network device (for example, a network switch). Controller 102 may communicate with network nodes 104, 106, 108, 110, and 112 via a standardized protocol (example, OpenFlow). In an example, controller 102 may be a head end device, which may be located at headquarter or a data center of an enterprise.

In an example, controller 102 may be present in a cloud system. The cloud system may be a private cloud, a public cloud, or a hybrid cloud. The cloud system may be used to provide or deploy various types of cloud services. These may include Infrastructure as a Service (laaS), Platform as a Service (PaaS), Software as a Service (SaaS), and so forth

Controller 102 may communicate with network nodes 104, 106, 108, 110, and 112 over a network 130. The network 130 may be a wireless or wired network. The computer network 130 may include, for example, a Wide Area Network (WAN), a Metropolitan Area Network (MAN), a Storage Area Network (SAN), a Campus Area Network (CAN), or the like. Further, the computer network 130 may be a public network (for example, the Internet) or a private network.

Network nodes 104, 106, 108, 110, and 112 may each include, by way of non-limiting examples, a branch office controller or a network device. In an example, the branch office controller may be any server, computing device, or the like. In an example, branch controller may be a computer application (machine-executable instructions). In an example, the branch office controller may be located at a branch office of an enterprise. Examples of the network device may include a network switch, a network router, a virtual switch, a virtual router, a VPN concentrator and a virtual internet gateway. A VPN concentrator may provide a secure creation of VPN connections and delivery of messages between VPN nodes. In an example, network nodes 104, 106, 108, 110, and 112 may each be an SDN enabled device or an OpenFlow enabled device.

Network nodes 104, 106, 108, 110, and 112 may each include a routing agent. Network nodes 104, 106, 108, 110, and 112 may each communicate with controller 102 via a standardized protocol such as OpenFlow. In an example, routing agent may include an OpenFlow agent, which may allow the abstraction of a network node so that it could be managed by controller 102. In an example, network nodes 104, 106, 108, 110, and 112 may each be a gateway node. Examples of a gateway node may include a Virtual Private Network concentrator (VPNC) and Virtual Internet Gateway (VIG). In an example, network nodes 104, 106, 108, 110, and 112 may each be a branch node. An example of a branch node may include a branch office controller. The aforementioned node classification may be based on the role of IPsec tunnels on a node. If a node has Primary/Secondary load balanced IPsec tunnels, it may be classified as a branch node, else the node may be referred to as a gateway node. Internet Protocol Security (IPsec) is a network protocol suite that authenticates and encrypts the packets of data sent over a network. IPsec, for example, may extend private networks through creation of encrypted tunnels which secure site to site connectivity across untrusted networks. IPsec can protect data flows between a pair of hosts, between a pair of security gateways, or between a security gateway and a host. An IPsec tunnel may allow encrypted IP traffic to be exchanged between the participating entities.

In an example, routing agent on a network node may provide routing information related to the node to controller 102. Some non-limiting examples of the routing information may include information related to local overlay tunnels (for example, IPsec tunnels in a node), information related to virtual LAN (VLAN) subnets learnt from a dynamic protocol (for example, OSPF), information related to static routes, and information related to routes learned via OSPF.

In an example, controller 102 may include a topology engine 152, a routing engine 154, and a distribution engine 156.

Controller 102 may be implemented by at least one computing device and may include at least engines 152, 154, and 156 which may be any combination of hardware and programming to implement the functionalities of the engines described herein. In examples described herein, such combinations of hardware and programming may be implemented in a number of different ways. For example, the programming for the engines may be processor executable instructions stored on at least one non-transitory machine-readable storage medium and the hardware for the engines may include at least one processing resource to execute those instructions. In some examples, the hardware may also include other electronic circuitry to at least partially implement at least one engine of controller 102. In some examples, the at least one machine-readable storage medium may store instructions that, when executed by the at least one processing resource, at least partially implement some or all engines of the computing device. In such examples, controller 102 may include the at least one machine-readable storage medium storing the instructions and the at least one processing resource to execute the instructions.

Topology engine 152 on controller 102 determines an overlay network topology among a plurality of network nodes (for example, 104, 106, 108, 110, and 112) in a computing environment (for example, 100). According to the invention, the computing environment is a software-defined Wide Area Network (SD-WAN). An overlay network may include a virtual network that is adapted to run on top of a physical network. Nodes (for example, 104, 106, 108, 110, and 112) participating in an overlay network may be adapted to create and build the virtual network. An overlay network may be used, for example, in multicast communication, video and voice calls (VoIP), and peer-to-peer file sharing. Topology engine 152 may listen to a SDN controller's (not shown) asynchronous feed to learn about network nodes in the computing environment 100. For example, topology engine 152 may query the SDN controller's node database to know about existing network nodes (for example, 104, 106, 108, 110, and 112) in the computing environment 100. Topology engine 152 may build its own network node database based on updates from the SDN controller. Each network node may be represented uniquely by its MAC address, which may be referred to as "Node-Id".

Topology engine 152 determines network topology of an overlay network among the network nodes (for example, 104, 106, 108, 110, and 112) by exchanging link state messages with the network nodes. Once a network node is learned, topology engine 152 may initiate a boot-strapping process for the node. As part of the process, topology engine 152 may send a Protocol-Start message to the node to indicate the initiation of link state message exchanges. Topology engine 152 may then send a "Link-Get-All" request message to the node. This message is sent to obtain existing overlay tunnel database information from a node. This is part of the bootstrapping process. In response, a routing agent in the node may send Link-Update messages to topology engine 152. These messages may contain details related to an overlay network, for example, IPsec tunnels in the node. In example, the information may relate to IPsec tunnels that are used for load balancing. These messages may be sent when an overlay tunnel is created, deleted, or flapped (Up/Down) on the node.

In an example, a Link-Update message may include the following information: IPsec tunnel name, tunnel originating Node-Id, tunnel terminating Node-Id, cost, and role. The tunnel name may uniquely represent an edge originating from the node. There can be multiple tunnels or edges between the same originating and terminating nodes. Role attribute of a link classifies the IPsec tunnel as one of primary, secondary or peer role. A primary role indicates and a secondary role may indicate that the tunnel is terminating to a virtual internet gateway and is being load-balanced with failover support. All other tunnels may be classified under peer role. Cost and role attributes may be used to derive the next-hops when calculating routes for a node. Each tunnel to the primary or secondary headend may be assigned a cost. For example, a tunnel to the primary headend may be assigned a lower cost, while a tunnel to the secondary headend may be assigned a higher cost. This is to ensure that the network upstream converges to pick the primary headend because of the lower cost.

On receiving the Link-Update messages, topology engine 152 may begin building an overlay network topology graph. In an example, the overlay network topology graph may be a directed graph where the nodes may be represented as vertices and the overlay network (for example, IPsec tunnels) may be represented as edges between vertices. An edge may be unidirectional, which originates from one node and terminates at another node. Every link may create an edge between the originating node and the terminating node. After sharing the routing information, the routing agent on a node may send a "Replay-Done" message to topology engine 152. This message may indicate that all the local overlay tunnel and route database information has been replayed to controller 102 from the node.

Topology engine 152 receives respective routing information from the network nodes (for example, 104, 106, 108, 110, and 112) in the computing environment 100. According to the invention, topology engine 152 receives respective routing information from a respective routing agent (for example, 114, 116, 118, 120, or 122) present on each node. In an example, topology engine 152 may receive the respective routing information via a SDN (for example, OpenFlow) TCP transport channel. A special message structure may be used to share the routing information between receipt engine and agents. In an example, OpenFlow VENDOR message type (as defined in an OpenFlow specification) may be used to share the routing information.

In an example, topology engine 152 may discover all the routes that are reachable or behind a network node as part of node bootstrapping process, whereby topology engine 152 may query for all such routes from a node. For example, topology engine 152 may send a "Route-Get-All" message to the node. In response to this message, routing agent may send existing route or prefix database information to controller 102. In response, topology engine 152 may receive a "Route-Update" message from the node that includes its route. When all such routes are replayed back, topology engine 152 may receive a "Route-Replay-Done" message from the network node.

Each of these routes may be added to a route-source database. The route-source database may be maintained per node. In other words, topology engine 152 may store respective routing information from each node in respective route databases maintained for each node on controller 102. After the initial bootstrap, a network node may send Route-Update message to the application dynamically as and when new routes are added or deleted in the node. Topology engine 152 may keep updating routes in the route-source database corresponding to the node based on "Route-update" messages.

Some non-limiting examples of the routing information may include information related to local overlay tunnels (according to the invention, IPsec tunnels in a node), information related to virtual local area network (VLAN) subnets learnt from a dynamic protocol (for example, OSPF), information related to static routes, and information related to routes learned via OSPF. In an example, the information related to IPsec tunnels may comprise information related to an IPsec tunnel name, a tunnel originating node ID, a tunnel terminating node ID, cost, and role. In an example, the information related to IPsec tunnels may comprise information related to IPsec tunnels that are used for load balancing.

Routing engine 154 determines a respective routing decision for each node in the computing environment 100, based on the overlay network topology determined by topology engine 152 and the respective routing information received from a respective agent on the network nodes. For each node, routing engine 154 may determine a set of best next-hops through which a route is reachable.

Once routing engine 154 determines a respective routing decision for each node in the computing environment 100, distribution engine 156 distributes the respective routing decision to corresponding node in the computing environment 100. In response, the respective routing agent on the each network node may, for example, receive, process, and apply the respective routing decision corresponding to the node.

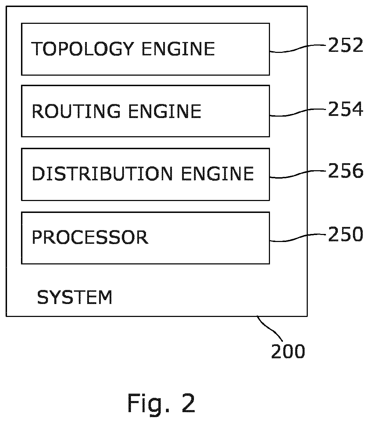

FIG. 2 is a block diagram of an example system 200 for determining routing decisions in a SD-WAN. In an example, system 200 may be analogous to controller 102 of FIG. 1, in which like reference numerals correspond to the same or similar, though perhaps not identical, components. For the sake of brevity, components or reference numerals of FIG. 2 having a same or similarly described function in FIG. 1 are not being described in detail in connection with FIG. 2. Said components or reference numerals may be considered alike.

According to the invention, system 200 includes a processor 250, a topology engine 252, a routing engine 254, and a distribution engine 256. In an example, topology engine 252, routing engine 254, and distribution engine 256 may perform functionalities similar to those described earlier in reference to topology engine 152, routing engine 154, and distribution engine 156 of FIG. 1, respectively.

According to the invention, topology engine 252 may receive respective routing information from a respective routing agent present on each node of a plurality of network nodes in a software-defined Wide Area Network (SD-WAN). Topology engine 252 determines an overlay network topology of IPsec tunnels among the plurality of network nodes. Based on the overlay network topology and the respective routing information received from the respective agent, routing engine 254 determines a respective routing decision for each node. Distribution engine 256 distributes the respective routing decision to corresponding network node in the SD-WAN.

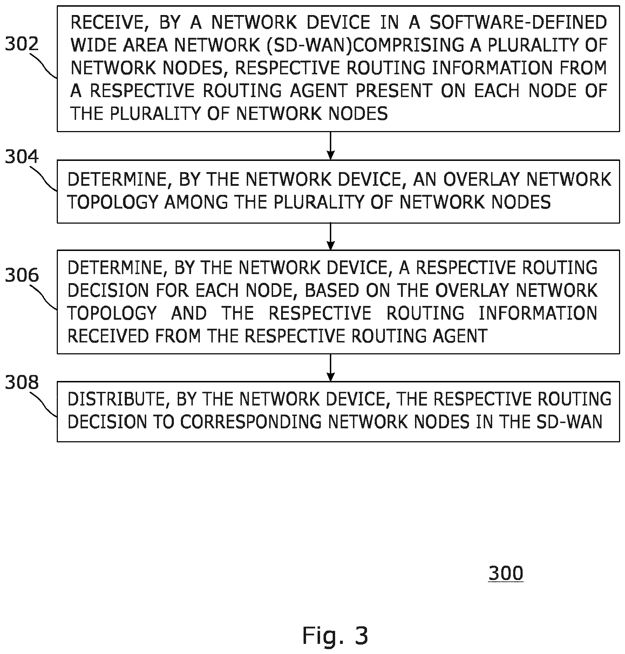

FIG. 3 is a block diagram of an example method 300 of determining routing decisions on a controller in a SD-WAN. The method 300, which is described below, may be executed on a computing device such as controller 102 of FIG. 1. However, other devices may be used as well.

At block 302, a controller in a SD-WAN comprising a plurality of network nodes may receive respective routing information from a respective routing agent present on each node of the plurality of network nodes. At block 304, the controller may determine an overlay network topology among the plurality of network nodes. At block 306, based on the overlay network topology and the respective routing information received from the respective routing agent, the controller may determine a respective routing decision for each node. At block 308, the controller may distribute the respective routing decision to corresponding network node in the SD-WAN.

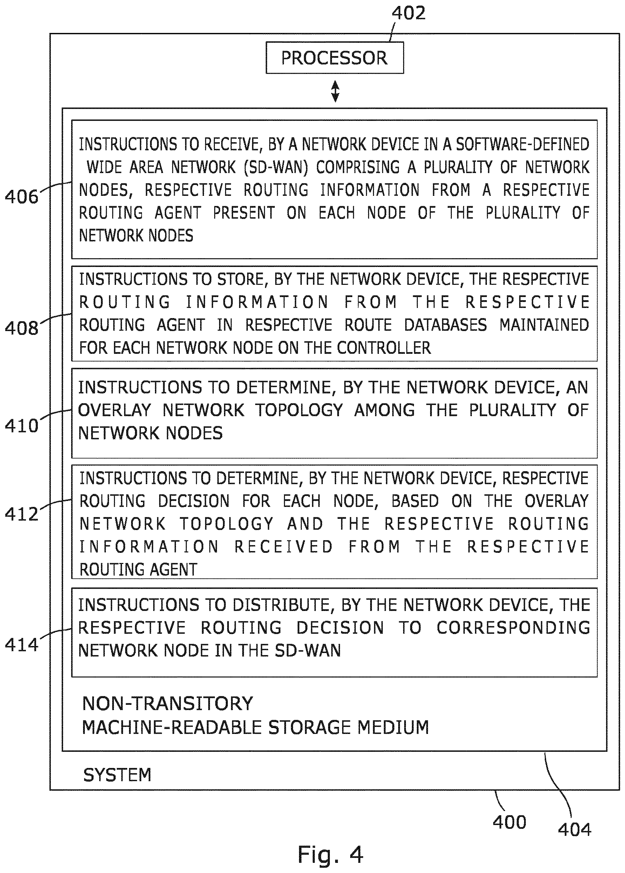

FIG. 4 is a block diagram of a system 400 including instructions in a machine-readable storage medium for determining routing decisions on a controller in a SD-WAN.

System 400 includes a processor 402 and a machine-readable storage medium 404 communicatively coupled through a system bus. Processor 402 may be any type of Central Processing Unit (CPU), microprocessor, or processing logic that interprets and executes machine-readable instructions stored in machine-readable storage medium 404. Machine-readable storage medium 404 may be a random access memory (RAM) or another type of dynamic storage device that may store information and machine-readable instructions that may be executed by processor 402. For example, machine-readable storage medium 404 may be Synchronous DRAM (SDRAM), Double Data Rate (DDR), Rambus DRAM (RDRAM), Rambus RAM, etc. or storage memory media such as a floppy disk, a hard disk, a CD-ROM, a DVD, a pen drive, and the like. In some examples, machine-readable storage medium 404 may be a non-transitory machine-readable medium. In some examples, machine-readable storage medium 404 may be remote but accessible to system 400.

Machine-readable storage medium 404 may store instructions 406, 408, 410, 412, and 414. In some examples, instructions 406 may be executed by processor 402 to receive, by a controller in a SD-WAN comprising a plurality of network nodes, respective routing information from a respective routing agent present on each node of the plurality of network nodes. Instructions 408 may be executed by processor 402 to store, by the controller, the respective routing information from the respective routing agent in respective route databases maintained for each network node on the controller. Instructions 410 may be executed by processor 402 to determine, by the controller, an overlay network topology among the plurality of network nodes. Instructions 412 may be executed by processor 402 to determine, by the controller, a respective routing decision for each node, based on the overlay network topology and the respective routing information received from the respective routing agent. Instructions 414 may be executed by processor 402 to distribute, by the controller, the respective routing decision to corresponding network node in the SD-WAN.

For the purpose of simplicity of explanation, the example method of FIG. 3 is shown as executing serially, however it is to be understood and appreciated that the present and other examples are not limited by the illustrated order. The example systems of FIGS. 1, 2, and 4, and method of FIG. 3 may be implemented in the form of a computer program product including computer-executable instructions, such as program code, which may be run on any suitable computing device in conjunction with a suitable operating system (for example, Microsoft Windows®, Linux®, UNIX®, and the like). Examples within the scope of the present solution may also include program products comprising non-transitory computer-readable media for carrying or having computer-executable instructions or data structures stored thereon. Such computer-readable media can be any available media that can be accessed by a general purpose or special purpose computer. By way of example, such computer-readable media can comprise RAM, ROM, EPROM, EEPROM, CD-ROM, magnetic disk storage or other storage devices, or any other medium which can be used to carry or store desired program code in the form of computer-executable instructions and which can be accessed by a general purpose or special purpose computer. The computer readable instructions can also be accessed from memory and executed by a processor.

It should be understood that the above-described examples of the present solution is for the purpose of illustration only. Although the solution has been described in conjunction with a specific example thereof, numerous modifications may be possible. Other substitutions, modifications and changes may be made. All of the features disclosed in this specification (including any accompanying claims, abstract and drawings), and/or all of the steps of any method or process so disclosed, may be combined in any combination, except combinations where at least some of such features and/or steps are mutually exclusive.

## Claims

1. A method comprising:
receiving (302), by a network device (102) in a software-defined Wide Area Network, SD-WAN, (100) comprising a plurality of network nodes (104-112), respective routing information from a respective routing agent (114-122) present on each node of the plurality of network nodes (104-112);
determining (304), by the network device (102), an overlay network topology of Internet Protocol Security, IPsec, tunnels among the plurality of network nodes (104-112);
determining (306), by the network device (102), a respective routing decision for each node, based on the overlay network topology and the respective routing information received from the respective routing agent (114-122); and
distributing (308), by the network device (102), the respective routing decision to corresponding network nodes (104-112) in the SD-WAN,
**characterized in that** determining (304), by the network device (102), the overlay network topology of Internet Protocol Security, IPsec, tunnels among the plurality of network nodes (104-112) comprises:
exchanging, by the network device (102), link state messages with each node in the plurality of network nodes (104-112), wherein the link state messages include cost and role information related to existing Internet Protocol Security, IPsec, tunnels in a node, and wherein the role information classifies an IPsec tunnel of said IPSec tunnels as one of a primary role, a secondary role and a peer role, and the primary role indicates that the tunnel is terminating to a virtual internet gateway and being load-balanced with failover support.

2. The method of claim 1, further comprising:
storing, by the network device, the respective routing information from the respective routing agent in respective route databases maintained for each network node on the network device.

3. The method of claim 1, wherein the respective routing decision is used to implement routes on the corresponding network nodes.

4. The method of claim 1, wherein the information related to the existing IPsec tunnels further comprises at least one of an IPsec tunnel name, a tunnel originating node ID, and a tunne terminating node ID.

5. The method of claim 1, wherein the existing IPsec tunnels include an IPsec tunnel used for load balancing.

6. The method of claim 1, wherein one of the plurality of network nodes includes a branch office controller.

7. The method of claim 1, wherein the routing information further includes information related to virtual local area network, VLAN, subnets.

8. A system comprising:
a processor (250);
a topology engine (252) configured to be executed by the processor to:
receive respective routing information from a respective agent present on each node of a plurality of network nodes in a software-defined Wide Area Network, SD-WAN,; and
determine an overlay network topology of Internet Protocol Security, IPsec, tunnels among the plurality of network nodes;
a routing engine (254) executed by the processor to:
determine a respective routing decision for each node, based on the overlay network topology and the respective routing information received from the respective agent; and
a distribution engine (256) configured to be executed by the processor to:
distribute the respective routing decisions to corresponding network nodes in the SD-WAN,
**characterized in that** determining the overlay network topology of IPSec tunnels among the plurality of network nodes comprises:
exchanging, by the topology engine, link state messages with each node in the plurality of network nodes, wherein the link state messages include cost and role information related to existing Internet Protocol Security, IPsec, tunnels in a node, and wherein the role information classifies an IPsec tunnel of said IPSec tunnels as one of a primary role, a secondary role and a peer role, and the primary role indicates that the tunnel is terminating to a virtual internet gateway and being load-balanced with failover support.

9. The system of claim 8, wherein one of the plurality of network nodes includes a Virtual Internet Gateway, VIG.

10. The system of claim 8, wherein the routing information further includes information related to static routes.

11. The system of claim 8, wherein at least one of the plurality of network nodes is compliant with OpenFlow standard.

12. A non-transitory machine-readable storage medium comprising instructions, the instructions executable by a processor to operate according to any of method claims 1 to 7.

## Patentansprüche

1. Verfahren, das Folgendes umfasst:
Empfangen (302), durch eine Netzwerkvorrichtung (102) in einem softwaredefinierten Weitverkehrsnetz (*Software-Defined Wide Area Network* - SD-WAN) (100), das mehrere Netzwerkknoten (104-112) umfasst, von jeweiligen Routing-Informationen von einem jeweiligen Routing-Agenten (114-122), der auf jedem Knoten der mehreren Netzwerkknoten (104-112) vorhanden ist;
Bestimmen (304), durch die Netzwerkvorrichtung (102), einer Overlay-Netzwerktopologie von Internetprotokollsicherheit-(*Internet Protocol Security-* IPsec)-Tunneln unter den mehreren Netzwerkknoten (104-112);
Bestimmen (306), durch die Netzwerkvorrichtung (102), einer jeweiligen Routing-Entscheidung für jeden Knoten, auf der Basis der Overlay-Netzwerktopologie und der jeweiligen Routing-Informationen, die von dem jeweiligen Routing-Agenten (114-122) empfangen werden; und
Verteilen (308), durch die Netzwerkvorrichtung (102), der jeweiligen Routing-Entscheidung an entsprechende Netzwerkknoten (104-112) in dem SD-WAN, **dadurch gekennzeichnet, dass** das Bestimmen (304), durch die Netzwerkvorrichtung (102), der Overlay-Netzwerktopologie von Internetprotokollsicherheit-(IPsec)-Tunneln unter den mehreren Netzwerkknoten (104-112) Folgendes umfasst:
Austauschen, durch die Netzwerkvorrichtung (102), von Verbindungszustandsnachrichten mit jedem Knoten in den mehreren Netzwerkknoten (104-112), wobei die Verbindungszustandsnachrichten Kosten- und Rolleninformationen einschließen, die sich auf bestehende Internetprotokollsicherheit-(IPsec)-Tunnel in einem Knoten beziehen, und wobei die Rolleninformationen einen IPSec-Tunnel der IPSec-Tunnel als eine primäre Rolle, eine sekundäre Rolle oder eine Peer-Rolle klassifizieren, und die primäre Rolle anzeigt, dass der Tunnel in einem virtuellen Internet-Gateway endet und lastausgleichend mit einer Ausfallsicherungsunterstützung ist.

2. Verfahren nach Anspruch 1, das ferner Folgendes umfasst:
Speichern, durch die Netzwerkvorrichtung, der jeweiligen Routing-Informationen von dem jeweiligen Routing-Agenten in jeweiligen Routendatenbanken, die für jeden Netzwerkknoten auf der Netzwerkvorrichtung aufrechterhalten werden.

3. Verfahren nach Anspruch 1, wobei die jeweilige Routing-Entscheidung verwendet wird, um Routen auf den entsprechenden Netzwerkknoten zu implementieren.

4. Verfahren nach Anspruch 1, wobei die Informationen, die sich auf die bestehenden IPSec-Tunnel beziehen, ferner einen IPSec-Tunnelnamen, eine Tunnelursprungsknoten-ID und/oder eine Tunnelendknoten-ID umfassen.

5. Verfahren nach Anspruch 1, wobei die bestehenden IPSec-Tunnel einen IPSec-Tunnel einschließen, der für einen Lastausgleich verwendet wird.

6. Verfahren nach Anspruch 1, wobei einer der mehreren Netzwerkknoten eine Zweigstellensteuerung einschließt.

7. Verfahren nach Anspruch 1, wobei die Routing-Informationen ferner Informationen einschließen, die sich auf Virtuelles-Lokales-Netzwerk-(*Virtual Local Area Network-*VLAN)-Teilnetze beziehen.

8. System, das Folgendes umfasst:
einen Prozessor (250);
eine Topologie-Engine (252), die konfiguriert ist, um durch den Prozessor für Folgendes ausgeführt zu werden:
Empfangen von jeweiligen Routing-Informationen von einem jeweiligen Agenten, der auf jedem Knoten von mehreren Netzwerkknoten in einem softwaredefinierten Weitverkehrsnetz (SD-WAN) vorhanden ist; und
Bestimmen einer Overlay-Netzwerktopologie von Internetprotokollsicherheit-(IPsec)-Tunneln unter den mehreren Netzwerkknoten;
eine Routing-Engine (254), die durch den Prozessor für Folgendes ausgeführt wird:
Bestimmen einer jeweiligen Entscheidung für jeden Knoten, auf der Basis der Overlay-Netzwerktopologie und der jeweiligen Routing-Informationen, die von dem jeweiligen Agenten empfangen werden; und
eine Verteilungs-Engine (256), die konfiguriert ist, um durch den Prozessor für Folgendes ausgeführt zu werden:
Verteilen der jeweiligen Routing-Entscheidungen an entsprechende Netzwerkknoten in dem SD-WAN, **dadurch gekennzeichnet, dass** das Bestimmen der Overlay-Netzwerktopologie von IPSec-Tunneln unter den mehreren Netzwerkknoten Folgendes umfasst:
Austauschen, durch die Topologie-Engine, von Verbindungszustandsnachrichten mit jedem Knoten in den mehreren Netzwerkknoten, wobei die Verbindungszustandsnachrichten Kosten- und Rolleninformationen einschließen, die sich auf bestehende Internetprotokollsicherheit-(IPsec)-Tunnel in einem Knoten beziehen, und wobei die Rolleninformationen einen IPSec-Tunnel der IPSec-Tunnel als eine primäre Rolle, eine sekundäre Rolle oder eine Peer-Rolle klassifizieren und die primäre Rolle anzeigt, dass der Tunnel zu einem virtuellen Internet-Gateway endet und lastausgleichend mit einer Ausfallsicherungsunterstützung ist.

9. System nach Anspruch 8, wobei einer der mehreren Netzwerkknoten ein virtuelles Internet-Gateway (VIG) einschließt.

10. System nach Anspruch 8, wobei die Routing-Informationen ferner Informationen einschließen, die sich auf statische Routen beziehen.

11. System nach Anspruch 8, wobei wenigstens einer der mehreren Netzwerkknoten mit dem OpenFlow-Standard übereinstimmt.

12. Nichtflüchtiges maschinenlesbares Speichermedium, das Anweisungen umfasst, wobei die Anweisungen durch einen Prozessor ausführbar sind, um nach einem der Verfahrensansprüche 1 bis 7 zu arbeiten.

## Revendications

1. Procédé comprenant :
la réception (302), par un dispositif réseau (102) dans un réseau étendu à définition logicielle, SD-WAN, (100) comprenant une pluralité de nœuds de réseau (104-112), d'informations de routage respectives d'un agent de routage respectif (114-122) présent sur chaque nœud de la pluralité de nœuds de réseau (104-112) ;
la détermination (304), par le dispositif réseau (102), d'une topologie de réseau superposé de tunnels de sécurité de protocole Internet, IPsec, parmi la pluralité de nœuds de réseau (104-112) ;
la détermination (306), par le dispositif réseau (102), d'une décision de routage respective pour chaque nœud, sur la base de la topologie de réseau superposé et des informations de routage respectives reçues de l'agent de routage respectif (114-122) ; et
la distribution (308), par le dispositif réseau (102), de la décision de routage respective aux nœuds de réseau (104-112) correspondants dans le SD-WAN,
**caractérisé en ce que** la détermination (304), par le dispositif réseau (102), de la topologie de réseau superposé de tunnels de sécurité de protocole Internet, IPsec, parmi la pluralité de nœuds de réseau (104-112) comprend :
l'échange, par le dispositif réseau (102), de messages d'état de liaison avec chaque nœud dans la pluralité de nœuds de réseau (104-112), les messages d'état de liaison comportant des informations de coût et de rôle relatives aux tunnels de sécurité de protocole Internet, IPsec, existants dans un nœud, et les informations de rôle classant un tunnel IPsec desdits tunnels IPSec en tant que l'un parmi un rôle principal, un rôle secondaire et un rôle homologue, et le rôle principal indiquant que le tunnel se termine par une passerelle Internet virtuelle et est en cours d'équilibrage de charge avec prise en charge de basculement.

2. Procédé selon la revendication 1, comprenant en outre :
le stockage, par le dispositif réseau, des informations de routage respectives de l'agent de routage respectif dans des bases de données de routes respectives maintenues pour chaque nœud de réseau sur le dispositif réseau.

3. Procédé selon la revendication 1, dans lequel la décision de routage respective est utilisée pour mettre en œuvre des routes sur les nœuds de réseau correspondants.

4. Procédé selon la revendication 1, dans lequel les informations relatives aux tunnels IPsec existants comprennent en outre au moins l'un parmi un nom de tunnel IPsec, un ID de nœud d'origine de tunnel et un ID de nœud de terminaison de tunnel.

5. Procédé selon la revendication 1, dans lequel les tunnels IPsec existants comportent un tunnel IPsec utilisé pour l'équilibrage de charge.

6. Procédé selon la revendication 1, dans lequel l'un de la pluralité de nœuds de réseau comporte un responsable de traitement de succursale.

7. Procédé selon la revendication 1, dans lequel les informations de routage comportent en outre des informations relatives aux sous-réseaux de réseau local virtuel, VLAN.

8. Système comprenant :
un processeur (250) ;
un moteur de topologie (252) configuré pour être exécuté par le processeur pour :
recevoir des informations de routage respectives d'un agent respectif présent sur chaque nœud d'une pluralité de nœuds de réseau dans un réseau étendu à définition logicielle, SD-WAN ; et
déterminer une topologie de réseau superposé de tunnels de sécurité de protocole Internet, IPsec, parmi la pluralité de nœuds de réseau ;
un moteur de routage (254) exécuté par le processeur pour :
déterminer une décision de routage respective pour chaque nœud, sur la base de la topologie de réseau superposé et des informations de routage respectives reçues de l'agent respectif ; et
un moteur de distribution (256) configuré pour être exécuté par le processeur pour :
distribuer les décisions de routage respectives aux nœuds de réseau correspondants dans le SD-WAN,
**caractérisé en ce que** la détermination de la topologie de réseau superposé de tunnels IPSec parmi la pluralité de nœuds de réseau comprend :
l'échange, par le moteur de topologie, de messages d'état de liaison avec chaque nœud de la pluralité de nœuds de réseau, les messages d'état de liaison comportant des informations de coût et de rôle relatives aux tunnels de sécurité de protocole Internet, IPsec, existants dans un nœud, et les informations de rôle classant un tunnel IPsec desdits tunnels IPSec en tant que l'un parmi un rôle principal, un rôle secondaire et un rôle homologue, et le rôle principal indiquant que le tunnel se termine par une passerelle Internet virtuelle et est en cours d'équilibrage de charge avec prise en charge de basculement.

9. Système selon la revendication 8, dans lequel l'un de la pluralité de nœuds de réseau comporte une passerelle Internet virtuelle, VIG.

10. Système selon la revendication 8, dans lequel les informations de routage comportent en outre des informations relatives à des routes statiques.

11. Système selon la revendication 8, dans lequel au moins l'un de la pluralité de nœuds de réseau est conforme à la norme OpenFlow.

12. Support de stockage non transitoire lisible par machine comprenant des instructions, les instructions étant exécutables par un processeur à faire fonctionner selon l'une quelconque des revendications de procédé 1 à 7.
